(19)

**Europäisches Patentamt**
**European Patent Office**
**Office européen des brevets**

(11) **EP 3 680 688 A1**

(12) **EUROPEAN PATENT APPLICATION**

(43) Date of publication:
**15.07.2020 Bulletin 2020/29**

(51) Int Cl.:
**G01S 13/90** *(2006.01)* **G01S 7/40** *(2006.01)*

(21) Application number: **19151405.8**

(22) Date of filing: **11.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Evosar Technologies GmbH**
**2700 Wiener Neustadt (AT)**

(72) Inventors:
• **Gurianov, Maksim**
 **2700 Wiener Neustadt (AT)**
• **Kuznetsov, Victor**
 **2700 Wiener Neustadt (AT)**
• **Nezhdanov, Ivan**
 **2700 Wiener Neustadt (AT)**
• **Budylev, Aleksandr**
 **2700 Wiener Neustadt (AT)**

(74) Representative: **Papula Oy**
**P.O. Box 981**
**00101 Helsinki (FI)**

(54) **METHOD AND SYSTEM FOR AUTOMATIC REAL TIME EVALUATION OF DOPPLER FREQUENCY AND ANGLE OF ANTENNA BEAM DEVIATION FROM A NORMAL LINE OF A MOVING AIR VEHICLE**

(57) This technical solution generally refers to the field of computer technology and particularly refers to methods and systems for measurement of Doppler frequency and antenna beam deflection angle from normal line of signal carrier frequency (central frequency) caused by movement of its source and/or movement of receiver. The method of automatic real time evaluation of Doppler frequency and angle of antenna beam deviation from a normal line of a moving air vehicle where on at least one computer at least one radio hologram is obtained from the radar, provided that the radio hologram is a two-dimensional array consisting of complex numbers; the radio hologram obtained at the previous step is divided by computer to blocks by azimuth and blocks by range; phase difference between every two adjacent columns of the radio hologram (n+1) and (n) is estimated by computer for each block obtained at the previous step; average phases by azimuth are obtained using the set of phase differences defined at the previous step through their averaging over the reading number of ADC signal; the average phase change is defined by computer for each block of radio hologram; evaluation of Doppler frequency and azimuthal observation angle with respect to flight-path vector is estimated by computer on basis of average value of radio hologram phase change. The technical result which appears when solving the above-mentioned technical problem is the improvement of image quality which has higher signal-to-noise ratio and higher resolution in contrast with images obtained with no allowance made for Doppler frequency.

On at least one computer at least one radio hologram is obtained from the radar, provided that the radio hologram is a two-dimensional array consisting of complex numbers and the size of which is equal to the last number of probing pulse by azimuth and the last reading number of ADC signal by range. — 110

The radio hologram obtained at the previous step is divided by computer to blocks by azimuth and blocks by range on basis of the size of radio hologram. — 120

The phase difference between every two adjacent columns of radio hologram (n+1) and (n) is defined by computer for each block obtained at the previous step. — 130

Average phases by azimuth are defined using the set of phase differences defined at the previous step through their averaging over the reading number of the ADC signal. — 140

Average value of phase change for each block of radio hologram is defined by computer. — 150

Doppler frequency and azimuthal observation angle with respect to flight-path vector is estimated by computer on basis of average value of radio hologram phase change. — 160

Fig. 8

EP 3 680 688 A1

**Description**

TECHNICAL FIELD

This technical solution generally refers to the field of computer technology and particularly refers to methods and systems for measurement of Doppler frequency and antenna beam deflection angle from normal line of signal carrier frequency (central frequency) caused by movement of its source and/or movement of receiver.

DESCRIPTION OF THE RELATED ART

Currently, the measurement of pulse response or frequency characteristics of a data transmission channel during motion of an air vehicle (hereinafter referred to as AV) allows obtaining information on how inhomogeneities of the environment corrupt the signal from transmitter to receiver. This information enables to develop and effectively apply the methods and technical means in a wide variety of applications: remote (wireless) communication, remote positioning and navigation of AV, recovery of spatial pattern of inhomogeneities in the environment under investigation, etc.

The signal propagating from AV to receiver is exposed to Doppler effect caused by movement of the AV and/or movement of the receiver. In the frequency domain the Doppler effect (Doppler shift) is a change in carrier frequency of a signal.

Influence of the Doppler effect on a propagating complex signal leads to shift of the whole band of frequencies of the complex signal together with the carrier frequency. Thus, in the frequency domain the frequency spectra of the received and emitted complex signals do not match but only overlap each other. In the time domain this is equivalent to the duration of the emitted signal not being equal to the duration of the received signal, which affects the quality of channel impulse response measurement. If the Doppler effect does not affect the propagating complex signal then the convolution of the emitted signal with the received one, which in the frequency domain is equal to multiplication of spectra, gives the maximum result by amplitude due to match of frequency spectra of the emitted and the received complex signal. If Doppler effect influence on propagating complex signal then the convolution of the emitted signal with the received one gives the lower result by amplitude as far as the frequency spectra of the emitted and the received complex signal mismatch and only intersect.

Miscalculated Doppler shift leads to overlap of objects on radar data, to specific quantization noise. There are also distortions in the form of blurred displacement from bright targets.

This effect leads to serious difficulties in generation of radar data with high resolution. It becomes necessary to consider an unknown turn away angle not only for obtaining of the detailed image. It provides necessary corrective offset of angular orientation of SAR (synthetic aperture radar) platform. In this technical solution it is suggested to use new approach to processing of radio communications signal based on evaluation of Doppler frequency and azimuthal observation angle with respect to flight-path vector on basis of average value of radio hologram phase change to eliminate the Doppler effect.

SUMMARY OF THE INVENTION

This technical solution is focused on removal of disadvantages common to the solutions known in the prior art.

The technical problem stipulated in this technical solution is the obtaining of estimated value of Doppler frequency and antenna beam deflection angle from normal line which is taken into account in image synthesis.

The technical result which appears when solving the above-mentioned technical problem is the improvement of image quality which has higher signal-to-noise ratio and higher resolution in contrast with images obtained with no allowance made for Doppler frequency.

The additional technical result is the elimination of effect of antenna deflection from straight-line motion axis and provision of the same image patterns which are obtained in the absence of deflections.

The above-mentioned technical result is achieved by performing the method of automatic real time evaluation of Doppler frequency and angle of antenna beam deviation from a normal line of a moving air vehicle where obtaining on at least one computer at least one radio hologram from a radar, wherein the radar is configured to send out probing pulses to obtain measurements by azimuth, record readings via an analogue-to-digital converter to obtain measurements by range, and generate a radio hologram in form of a two-dimensional array of complex numbers; wherein columns of the two-dimensional array of complex numbers correspond to the probing pulses, rows of the two-dimensional array of complex numbers correspond to the readings, and wherein the size of the two-dimensional array is defined by a number of the last probing pulse measurement by azimuth, and by a number of the last reading measurement of the analogue-to-digital converter by range; dividing the radio hologram obtained at the previous step by the computer into blocks by azimuth and blocks by range; determining a phase difference by azimuth between every two adjacent columns of the two-dimensional array by the computer following the numbers of the consecutive probing pulses for each block obtained at the previous step; obtaining by the computer average phases by azimuth using a predetermined set of phase differences by azimuth determined at the previous step and by averaging the phase differences by range over the reading number of the analogue-to-digital converter; determining by the computer an average value of phase change for each block of the radio hologram based on the average phases by azimuth obtained at the previous step; computing a Doppler frequency and azimuthal observation angle with respect to a ground speed vector of the moving air vehicle by the computer on the basis of the determined average value of phase change for each block of the radio hologram.

In some embodiments of the technical solution, the radio hologram is compressed by range.

In some embodiments of the technical solution, the radio hologram is corrected to eliminate hardware-based distortions and is brought to normalized form.

In some embodiments of the technical solution when the radio hologram is divided by computer into blocks the size of the block by azimuth depends on the size of synthetic aperture and coincides with the synthesized block.

In some embodiments of the technical solution the pulse mode of signal radiation is used in radar.

In some embodiments of the technical solution phase difference between two adjacent columns of radio hologram (n+1) and (n) is defined by computer for each block through complex conjugation operation.

The specified technical result is also achieved through implementation of system for automatic real time evaluation of Doppler frequency and angle of antenna beam deviation from a normal line of a moving air vehicle including the following means:

at least one radar mounted on a moving air vehicle, the radar comprising an analogue-to-digital converter; wherein the radar is configured to send out probing pulses to obtain measurements by azimuth, record readings via the analogue-to-digital converter to obtain measurements by range, and generate a radio hologram in form of a two-dimensional array of complex numbers; and
at least one computer configured to:

a. obtain the radio hologram generated by the radar;
b. divide radio hologram into blocks by azimuth and blocks by range;
c. determine phase differences by azimuth between every two adjacent columns of the two-dimensional array following the numbers of the consecutive probing pulses for each obtained block;
d. obtain average phases by azimuth using a predetermined set of determined phase differences by azimuth, and by averaging the phase differences by range over the reading number of the analogue-to-digital converter;
e. define the average phase change for each block of radio hologram based on the obtained average phases by azimuth;
f. estimate Doppler frequency and azimuthal observation angle with respect to flight-path vector on basis of average value of radio hologram phase change.

In some embodiments of the technical solution the system additionally comprises the transceiver antenna complex.

In some embodiments of the technical solution the transceiver active phased antenna array APAA antenna complex includes a receive/transmit path comprising an array of terminal amplifiers and an array of low-noise amplifiers as well as control unit.

In some embodiments of the technical solution the system additionally comprises an inertial navigation system based on MEMS sensors.

In some embodiments of the technical solution the computer is implemented as a 3U-VPX unit, which has an active air cooling system, as well as a power supply system from the onboard voltage.

In some embodiments of the technical solution the computer comprises at least one general-purpose board and a high-performance MXM CUDA computing board.

In some embodiments of the technical solution the computer is implemented in the form of several 3U-VPX boards of the VITA-56 standard and is configured to monitor and control the operation of the system, interact via external interfaces, track the air vehicle telemetry.

In some embodiments of the technical solution the computer includes a HF-signal generation/reception subsystem that is implemented as a board which is designed in a 3U-VPX form factor.

BRIEF DESCRIPTION OF THE DRAWINGS

The features and advantages of this technical solution will be evident from the following detailed description and attached drawings where:

Fig. 1 shows the hardware complex of the system for automatic real time evaluation of Doppler frequency and antenna beam deflection angle from normal line;

Fig. 2 shows the geometric pattern of air vehicle inplane view.

Fig. 3 shows an embodiment for obtaining of radio hologram on a real time basis.

Fig. 4 shows the data collection where the information from the larger radio hologram is required to obtain an image of the certain size. Adjacent blocks on the image intersect on radio hologram so it affects the stability and smoothness of Doppler effect measurement.

Fig. 5 shows the division of the obtained radio hologram by range and by azimuth or averaging over the data.

Fig. 6 shows an embodiment for evaluation of phase increment.

Fig. 7 shows an embodiment for method of automatic real time evaluation of Doppler frequency and angle of antenna beam deviation from a normal line of a moving air vehicle with particular data.

Fig. 8 shows an embodiment for method of automatic real time evaluation of Doppler frequency and angle of antenna beam deviation from a normal line of a moving air vehicle as a flow chart.

## DETAILED DESCRIPTION OF EMBODIMENTS OF THE INVENTION

This technical solution can be implemented on a computer or another data processing device in the form of an automated system or a machine-readable medium comprising commands for the embodiment of the above-mentioned method.

The technical solution can be implemented in the form of a distributed computer system (centralized or decentralized), the components of which are cloud or local servers.

In this solution, a system means a computer system or an automated system (AS), an electronic computer (ECM), numeric control (NC), a programmable logic controller (PLC), a computer-assisted command system and any other devices capable of performing a specified, clearly defined sequence of calculation operations (actions, commands).

A command-processing device means an electronic unit or an integrated circuit (microprocessor) which performs computer-based commands (programs).

The command-processing device reads and performs computer-based commands (programs) from one or more data storage devices. A data storage device can represent hard disk drives (HDD), flash memory, read-only memory (ROM), solid-state drives (SSD), optical disc drives (ODD), cloud storages, etc.

A program is a sequence of commands to be performed by a computer control device or a command-processing device.

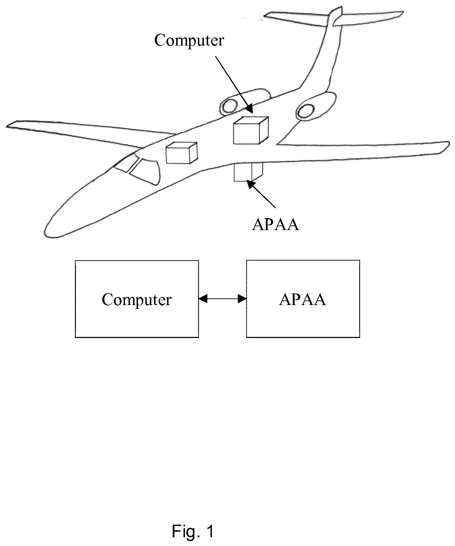

The hardware complex of the system shown on Fig. 1 comprises of the computer (performs processing and control of the complex which is described below) and transceiver antenna complex which may be represented by active phased antenna array (APAA) in some embodiments of the technical solution.

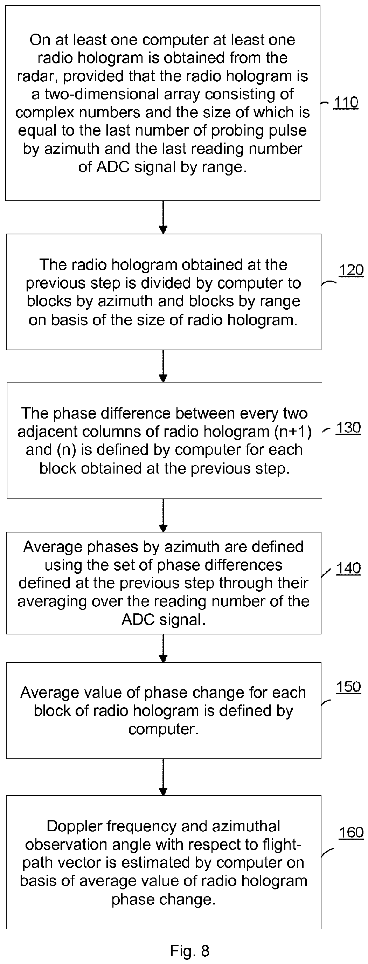

The method of automatic real time evaluation of Doppler frequency and angle of antenna beam deviation from a normal line of a moving air vehicle which is meant to eliminate Doppler effect is shown on Fig. 8 as a flow chart with specific implementation examples and it may include the following calculation steps described in details below, some of these steps are performed by the computer.

**Step 110:** obtaining on at least one computer at least one radio hologram from a radar, wherein the radar is configured to send out probing pulses to obtain measurements by azimuth, record readings via an analogue-to-digital converter to obtain measurements by range, and generate a radio hologram in form of a two-dimensional array of complex numbers; wherein columns of the two-dimensional array of complex numbers correspond to the probing pulses, rows of the two-dimensional array of complex numbers correspond to the readings, and wherein the size of the two-dimensional array is defined by a number of the last probing pulse measurement by azimuth, and by a number of the last reading measurement of the analogue-to-digital converter by range.

In each time period the analogue radar signals received from transceiver modules in digital processing system via an analogue-to-digital converter (ADC) are subjected to sampling and conversion into digital signals. The output signal of ADC is a sequence of complex numbers which is input to read only memory (ROM).

Data (radio hologram) registered by SAR system constitutes a complex signal. A sequence of samples of complex return signal is recorded to each probing pulse (PP) with frequency of the ADC $f_{ADC}$. The number of probing pulses is determined by duration of detection (radar operation) and pulse repetition frequency (PRF) $f_{PRF}$.

Radio hologram is recorded to read only memory (to solid state recorder) of the computer. From ROM the radio hologram is sent to Random Access Memory (RAM); data received by RAM for temporary storage are then transmitted to computer main memory (signal processor) which performs processing of holograms (preprocessing) to implement algorithms in accordance with the specified mode. RAM capacity must be enough for storage of a complete radio hologram (a complete radio hologram means a hologram of a size sufficient for obtaining a complete divided frame of radar information by processing it according to a predetermined algorithm). It is associated with the requirement to minimize the number of interchange operations between different computing facilities which lead to significant losses of time. Radio hologram sizes may vary depending on mode and time of session.

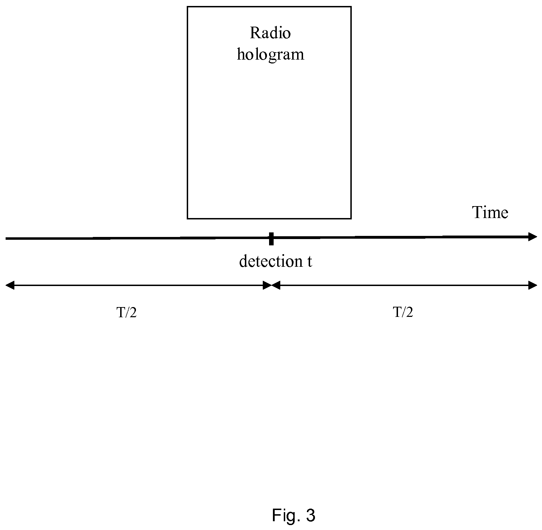

Real time data collection which constitute the radio hologram (hereinafter hologram) within synthesis of aperture T is shown on Fig. 3. Two adjacent columns of the hologram, which can be represented as a two-dimensional array consisting of the following complex numbers, are submitted onto the input of the computer, which can be hardware- or software-implemented on the server:

$$G(n,m) = \{g(n,m), n = 0,1,..,(N-1); m = 0,1,..,(M-1)\}$$

where:

$$g(n,m) \text{ - complex hologram element;}$$

$$g(n,m) = I(n,m) + j \cdot Q(n,m)$$

$$g(n,m), j = \sqrt{-1},$$

- quadrature components of the element.

$n$ - the number of the probing pulse of the SAR;
$m$ - the signal reading number by analog-to-digital converter (ADC);
$N$ - the size of the hologram by the number of the probing pulse (by azimuth);
$M$ - the size of the hologram according to the signal reading number by ADC (by range).

This data format makes it possible to reduce the number of calculations where the size of initial frame is limited by matrix sizes.
The type of input that determines the type of input hologram may be as follows:

◦ hologram, obtained after compression by range (the main embodiment), or
◦ initial hologram recorded by the SAR.

In some embodiments of the invention the input data (radio hologram) are corrected after receiving to eliminate hardware-based distortions and are brought to standard (normalized) form.
In some embodiments radiograms are obtained from the disk subsystem in which they were previously stored.
In some embodiments of the technical solution, a radio hologram can be used as input data both before and after compression by range (or «Pulse compression»). The pulse compression by range is a process of detecting a signal (compressing of a long pulse into a short digital peak, so that it becomes more powerful and better visible). The compression is carried out by radar equipment.
Hologram data format may be determined by a variety of factors depending on implementation. The most significant are as follows:

- radar sounding frequency. Radar sounding frequency must provide that signal carrier has passed no more than $D_a/2$ for the pulse period, where $D_a$ - real antenna aperture;
- signal digit. The higher the digit, the more terrain data (with objects) can be obtained;
- speed of signal recording to main memory (RAM);
- speed of signal recording to persistent memory (ROM).

Pulse mode of signal radiation may be used in the radar. The probing pulse can be an extended modulated radio pulse with constant linear frequency modulation or non-periodical phase coded modulation. A radio pulse may consist of N monochromatic subpulses of predetermined duration time.
Radar station with synthetic antenna aperture operates as follows (located in APAA). A digital array of probing pulse readings by DAC (digital-to-analogue converter) and master generator is converted into a radio signal fed to the input of a transmitter which provides its amplification and transmission. Antenna emits a direct radio pulse with a directional response pattern determined by the shape of an antenna directional pattern. Radio signals reflected from terrain are received by antenna in intervals between emitted pulses and passed to a receiver; from an output of the receiver the radio signal is converted into digital form through analogue-to-digital and frequency conversion by means of ADC and master generator. The resulting digital array is recorded into buffered random access memory (BRAM) from which the digital readings of the signal are translated to radio data link equipment at downlink points.

**Step 120:** dividing the radio hologram obtained at the previous step by the computer into blocks by azimuth and blocks by range.

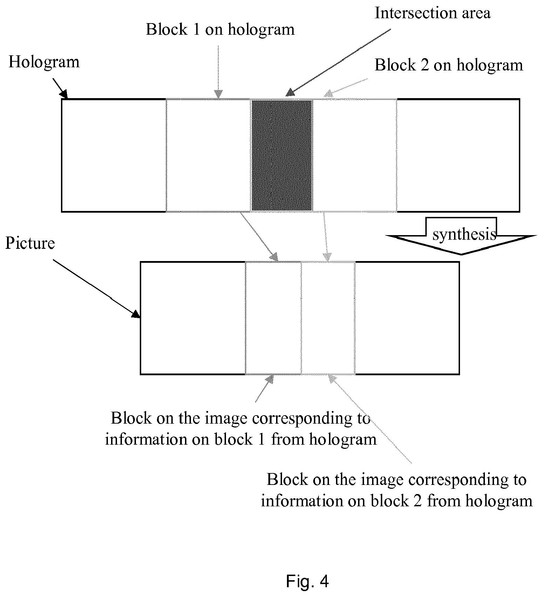

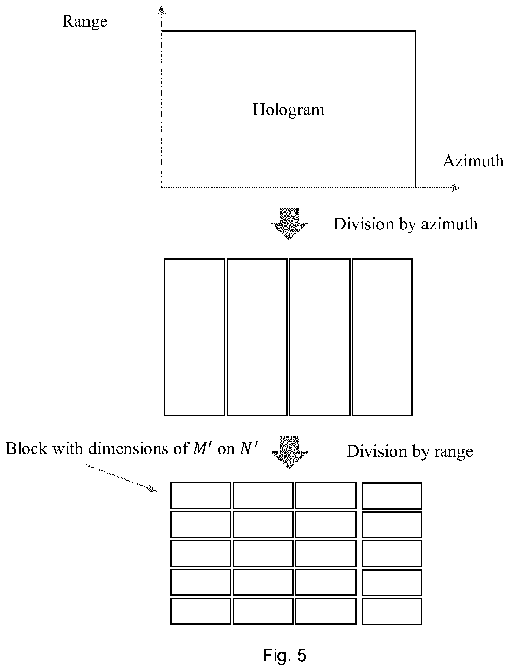

In the specific embodiment the method for evaluation of Doppler frequency and antenna beam deflection angle from normal line is used on radio hologram compressed by range. For this purpose the radio hologram is divided by the computer into blocks by azimuth with dimensions of N', and blocks by range with dimensions of M', as shown on Fig. 4 and Fig. 5. Dimensions of block by range M' in some embodiments may be assumed equal to 4096 but other implementation variations are also possible. Dimensions of block by azimuth N' depend on synthetic aperture dimensions and usually coincide with the synthesized block (approximate values may be assumed as 4096, 6144).

The method under consideration for evaluation of Doppler frequency and antenna beam deflection angle from normal line involves direct measurement of frequency over the received radar signal. Evaluation of AV speed is not required in this context.

This approach is based on evaluation of phase change between adjacent probing pulses.

Pattern of discretized phase change of point scatterer depending on time (detection start time is considered as zero) may be represented as:

$$\varphi(k) \approx 2\pi * f_{d0} * nT_p - \frac{2\pi V^2 \cos^2 \alpha}{\lambda\, r_0}\left(nT_p\right)^2 ,$$

where:

$$T_p = \frac{1}{f_{PRF}} - \text{период повторения} \ (f_{PRF} = 1000, 2000 \ \text{и тд.});$$

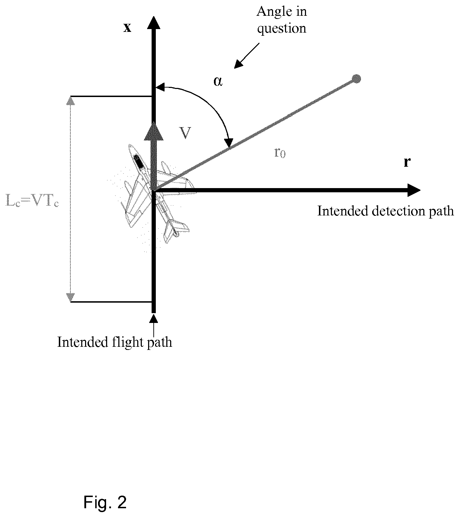

$f_{PRF}$ - probing pulses repetition frequency;
$V$ - ground speed of carrier (for example, air vehicle);
$r_0$ - minimum distance to point scatterer (Fig. 2);
$n$ - number of probing pulse (corresponds to reading number of hologram by azimuth);
$f_{d0}$ - Doppler frequency, unknown value (in Hz);
$\lambda$ - probing pulses emission wavelength;
$\alpha$ - azimuthal observation angle with respect to flight-path vector (Fig. 2).

By measuring of radio signal phase in adjacent time intervals (between sounding operations) n and n+1, it is detected what Doppler frequency value was for this point scatterer:

$$\Delta\varphi = \varphi(n + 1) - \varphi(n) \approx 2\pi f_{d0}\, T_p ,$$

from where:

$$\hat{f}_{d0} = f_{PRF} \frac{\Delta\hat{\varphi}}{2\pi} ,$$

where:

$$T_p = \frac{1}{f_{PRF}} - \text{repetition period} \ (f_{PRF} = 1000, 2000 \ \text{etc.});$$

$n$ - the number of the probing pulse;
$f_{PRF}$ - probing pulses repetition frequency;
$f_{d0}$ - Doppler frequency;
$\varphi(n)$ - phase value of point scatterer on probing pulse n.

It is important to note that for all point targets registered by AV radar the Doppler frequency value is constant. Doppler frequency directly determines Doppler shift. Doppler shift is a set of values of Doppler signal frequency (in Hz) and angle between antenna axis and AV flight-path vector in radians (as shown on Fig. 2).

Average phase of set of point objects under observation may be measured over radio hologram as shown below. Alternately, it directly depends on Doppler frequency. With that said it is possible to evaluate Doppler frequency at each pulse if the average phase is found by multiple pulses.

$$f_{d0}(n) = f_{PRF} \frac{(\varphi(n+1) - \varphi(n))}{2\pi}$$

Respectively, it is possible to evaluate the average value over time interval limited with n values by averaging all available pulses:

$$\hat{f}_{d0} = f_{PRF} \frac{\Delta\hat{\varphi}}{2\pi}$$

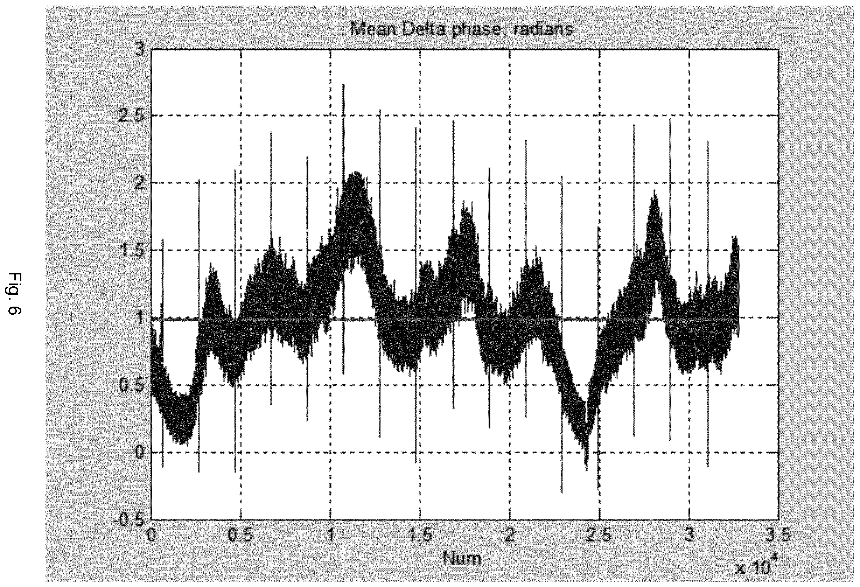

Example of evaluation of Doppler frequency is shown on Fig. 6. The readings of radio hologram corresponding to the numbers of probing pulses (various n) are located on abscissa axis.

The method for evaluation of Doppler frequency and antenna beam deflection from normal line includes the following steps performed automatically during registration of radio hologram and its recording to disk subsystem:

**Step 130:** determining a phase difference by azimuth between every two adjacent columns of the two-dimensional array by the computer following the numbers of the consecutive probing pulses for each block obtained at the previous step.

Using the property of conjugate complex numbers (conjugation operation changes the sign of complex number phase. The conjugate of a+ib will be the number a-ib) the phase difference between every two adjacent columns of radio hologram (n+1) and (n) is defined by computer:

$$\bar{a}(n+1, m) = \tilde{G}(n+1, m) * \tilde{G}^*(n, m), \qquad m = 1, 2, ..., M' \qquad n = 1, 2, ..., N' - 1$$

where:
*N', M'* - the total number of probing pulses by azimuth and ADC readings by range. correspondingly.

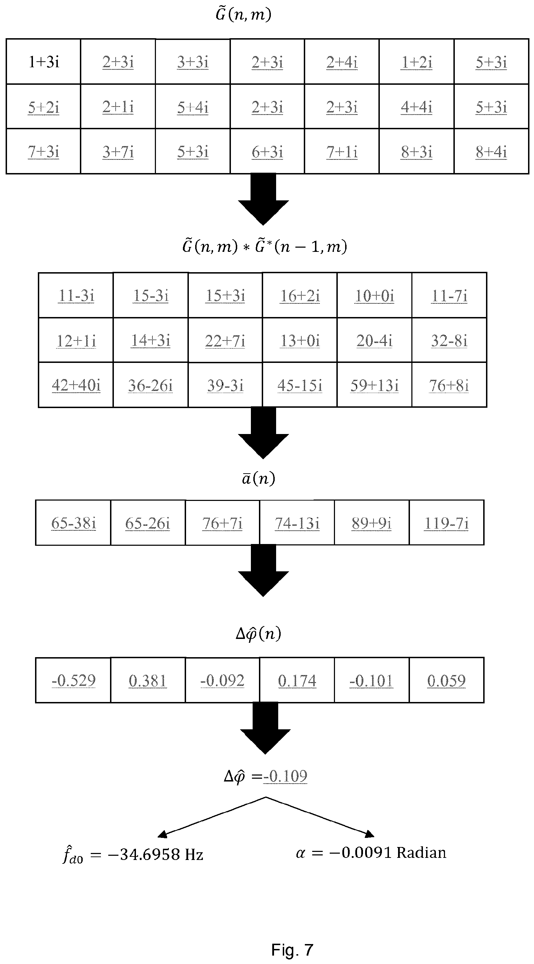

The detailed example of implementation of how the phase difference between points is defined is shown on Fig. 7.

**Step 140:** obtaining by the computer average phases by azimuth using a predetermined set of phase differences by azimuth determined at the previous step and by averaging the phase differences by range over the reading number of the analogue-to-digital converter.

Then switch from two-dimensional phase difference $\bar{a}(n, m)$ to the averaged phases $\Delta\varphi(n)$ by azimuth, wherefore the averaging by m is made by computer as shown on Fig. 7:

$$\Delta\varphi(n) = \varphi(n+1) - \varphi(n) = \sum_{m=1}^{M'} \bar{a}(n, m), \qquad n = 1, 2, ..., N' - 1$$

**Step 150:** determining by the computer an average value of phase change for each block of the radio hologram based on the average phases by azimuth obtained at the previous step.

Array $\Delta\varphi(n)$ is averaged:

$$\Delta\hat{\varphi} = \frac{1}{N'} \sum_{n=1}^{N'} \Delta\varphi(n),$$

**Step 160:** computing a Doppler frequency and azimuthal observation angle with respect to a ground speed vector of the moving air vehicle by the computer on the basis of the determined average value of phase change for each block of the radio hologram.

Evaluation of Doppler frequency $\hat{f}_{d0}$ (average value measured in Herz) and azimuthal observation angle with respect to AV flight-path vector is estimated (Fig. 2):

$$\hat{f}_{d0} = f_{\text{PRF}} \frac{\Delta \hat{\varphi}}{2\pi};$$

$$\hat{\alpha} = \arccos\left(\hat{f}_{d0} * \frac{\lambda}{2V}\right).$$

Example of operation of the technical solution is shown of Fig. 7. There is an example of radio hologram $\tilde{G}^{*}(n, m)$, from which the phase difference $\bar{a}(n, m)$ is calculated, as shown below. Then the evaluation of phase change $\Delta\varphi(n)$ is calculated from phase difference $\bar{a}(n, m)$. Finally, the average change of phase on the block of radio hologram is calculated and evaluations of Doppler frequency and angle in question are calculated.

The technical solution described above is a relatively non-complex, and can be used for the implementation on-board of the air vehicle in real time.

After calculation of Doppler frequency the synthetic aperture is corrected to the obtained Doppler frequency in image synthesis.

The hardware implementation of system for evaluation of Doppler frequency and antenna beam deflection angle from normal line, which represents the method described above and shown on Fig. 1, is disclosed below.

The system comprises a signal generation and processing unit or a computer. This computer can be implemented as a 3U-VPX unit, known in the art, which has an active air cooling system, as well as a power supply system from the onboard voltage.

The computer comprises at least one general-purpose board and a high-performance MXM CUDA computing board. In some embodiments of the invention, the computer is implemented in the form of several 3U-VPX boards of the VITA-56 standard and is configured to:

- Control and manage the system operation;
- Interact via external interfaces;
- Track the air vehicle telemetry;
- Process data.

The computer can perform the following functions: generation of a pulse at the radar operation frequency, transmission of the pulse to transceiver antenna complex, recording of the incoming signal from transceiver antenna complex, compression (matched filtering) of the pulse by range and recording of the result on the disk.

In addition, the computer comprises a disk subsystem that can be implemented as a 3U-VPX board of the VITA-56 standard. This subsystem comprises an array of solid-state disks connected by the NVME standard. The disk subsystem is designed for a long-term data storage (radio holograms and their processing results). The disk subsystem is designed to store various types of data to support the operation of the system. The disk subsystem can be implemented in the form of any type of volatile memory, non-volatile memory or a combination thereof, for example, static random access memory (SRAM), electrically erasable programmable read only memory (EEPROM), erasable programmable read only memory (EPROM), programmable read only memory (PROM), read only memory (ROM), magnetic memory, flash-memory, magnetic disk or optical disk and other, but not limited to.

In addition, the computer may comprise an information input/output subsystem, which includes a 3U-VPX board of the VITA-56 standard based on FPGA with a mezzanine module - a high-speed multichannel ADC. This subsystem is designed to digitize data, perform pulse compression by range through the coordinated filtering implemented on the FPGA. In addition, the subsystem performs the function of forming a code sequence for emission and monitors the operation of the subsystem for generation and reception of HF-signals.

The computer may include a HF-signal generation/reception subsystem that can be implemented as a board that is designed in a 3U-VPX form factor. This subsystem conducts formation of emitting pulses at a high frequency (10 GHz) and conducts phase modulation of the signal (BPSK) as well. In some embodiments of the invention, the subsystem performs the role of a preamplifier for transmission. In addition, it is responsible for reception and amplification of the response, demodulation and division into in-phase and quadrature components (I and Q components).

In addition, the computer may comprise a subsystem for power supply, telemetry and external interfaces. This subsystem is designed to provide power to the entire complex. The input receives on-board power in a wide range of values (18-76 V); at the output, there is a stable constant voltage of all required ratings (+5, -5, +12, -12, +32).

The system for evaluation of Doppler frequency and angle of antenna beam deviation from a normal line of a moving air vehicle comprises, in addition, the APAA antenna complex, which is made in the form of a specialized unit and comprises a frame, as well as a cooling subsystem (air, passive one).

In some embodiments of the technical solution transceiver antenna complex may be represented by active phased antenna array (APAA) or passive array of radiating elements, but not limited to.

The APAA antenna complex includes a control unit, which is designed to monitor the state of the APAA equipment, control the operation cyclogram depending on the mode. It also provides interaction by the control channel with external devices.

The APAA antenna system includes a receive/transmit path comprising an array of terminal amplifiers and an array of low-noise amplifiers. The receive/transmit path is designed in the form of a set of receive/transmit modules (one for each of the APAA channels) and is designed to amplify the emitted and received signals for their correct processing.

In addition, the APAA antenna complex comprises a set of broadband emitters, which is made of aluminium by laser cutting.

The system can additionally comprise an inertial navigation system based on micro-electro-mechanical (MEMS) sensors, which are a set of different sensors (MEMS) for acceleration, speed and orientation in space. The sensors are connected to a microcontroller, which ensures correct reading and smoothing of the data.

In an exemplary embodiment, the system may be implemented by one or more Specialized Integrated Circuits (SIS), Digital Signal Processor (DSP), Digital Signal Processing Devices (DSPDs), Programmable Logic Device (PLC), field-programmed micrologic circuit (FPGA), controller, microcontroller, microprocessor or other electronic components, and can be configured to implement a method for estimating the air vehicle flight-path instabilities.

Computing system for automatic real time evaluation of Doppler frequency and angle of antenna beam deviation from a normal line of a moving air vehicle may include display interface which transmits graphics, wording and other data for visualization and it may be touch-sensitive. The touch screen of the display can usually display graphics (for example, a radio hologram) and text, and also provides a user interface (for example, a graphical user interface (GUI)) through which the user can interact with the system, for example, get access and interact with the applications running in the system.

As will be understood by the person skilled in the prior art, the aspects of this technical solution may be implemented in the form of a system, a method or a computer program product. Accordingly, various aspects of this technical solution can be implemented solely as hardware, as software (including application software, etc.) or as an embodiment combining software and hardware aspects, which in general may be referred to as the "module", "system" or "architecture". In addition, some details of the implementation of this technical solution may take the form of a computer program product implemented on one or more machine-readable media having a machine-readable program code that is implemented thereon.

Any combination of one or more machine-readable media can also be used. The machine-readable medium of the data storage may represent, without limitation, an electronic, magnetic, optical, electromagnetic, infrared or semiconductor system, a device, or any suitable combination thereof. More specifically, examples (non-exhaustive list) of machine-readable storage media include: an electrical connection using one or more wires, a portable computer floppy disk; a hard disk, RAM, ROM, erasable programmable read-only memory (EPROM or Flash memory), a fiber optic connection, CD-ROM, an optical storage device, a magnetic storage device or any combination of the above. In the context of this description, a machine-readable storage medium can be any flexible data medium that can comprise or store a program for use by the system, device, apparatus, or in conjunction therewith.

The program code embedded in the machine-readable medium can be transmitted by any medium, including, without limitation, wireless, wire, fiber optic, infrared, and any other suitable network or a combination of the above listed.

The computer program code for performing operations for the steps of this technical solution can be written in any programming language or a combination of programming languages, including an object-oriented programming language such as Java, Smalltalk, C++, etc., and conventional procedural programming languages such as the programming language "C" or similar programming languages. The program code can be executed on the system computer in full, in part, or as a separate software package, partly on the local computer and partly on the remote computer, or completely on the remote computer. In the latter case, the remote computer can be connected to the local computer via an available network of any type, including a wide area network (WAN) or a connection to an external computer (for example, via the Internet using Internet providers).

The aspects of this technical solution have been described in detail with reference to flow charts, circuit diagrams and/or diagrams of methods, devices (systems) and computer program products in accordance with embodiments of this technical solution. It should be noted that each block from the flow chart and/or diagrams, as well as combinations of blocks from the flow chart and/or diagrams, can be implemented by computer program instructions. These computer program instructions may be provided to a general-purpose computing processor, a special-purpose computer, or another data processing device to create a procedure in such a way that the instructions executed by the computer processor or other programmable data processing device create the means for implementing the functions/actions specified in the block or blocks of the flow chart and/or diagram.

These computer program instructions may also be stored on a machine-readable medium that can control a computer other than a programmable data processing device or other than devices that operate in a specific manner in such a way that instructions stored on the machine-readable medium create a device including instructions that perform the functions/actions specified in the block of the flow chart and/or the diagram.

As it is clear to a person skilled in the art, the columns and rows of two-dimensional arrays mentioned in the present specification and claims are only used for clarity of reading. Columns and rows in two-dimensional arrays are completely interchangeable for the purposes of this specification.

## Claims

1. A method for automatic real time evaluation of Doppler frequency and angle of antenna beam deviation from a normal line of a moving air vehicle, the method comprising:

   • obtaining on at least one computer at least one radio hologram from a radar, wherein the radar is configured to send out probing pulses to obtain measurements by azimuth, record readings via an analogue-to-digital converter to obtain measurements by range, and generate a radio hologram in form of a two-dimensional array of complex numbers; wherein columns of the two-dimensional array of complex numbers correspond to the probing pulses, rows of the two-dimensional array of complex numbers correspond to the readings, and wherein the size of the two-dimensional array is defined by a number of the last probing pulse measurement by azimuth, and by a number of the last reading measurement of the analogue-to-digital converter by range.
   • dividing the radio hologram obtained at the previous step by the computer into blocks by azimuth and blocks by range;
   • determining a phase difference by azimuth between every two adjacent columns of the two-dimensional array by the computer following the numbers of the consecutive probing pulses for each block obtained at the previous step;
   • obtaining by the computer average phases by azimuth using a predetermined set of phase differences by azimuth determined at the previous step and by averaging the phase differences by range over the reading number of the analogue-to-digital converter;
   • determining by the computer an average value of phase change for each block of the radio hologram based on the average phases by azimuth obtained at the previous step;
   • computing a Doppler frequency and azimuthal observation angle with respect to a ground speed vector of the moving air vehicle by the computer on the basis of the determined average value of phase change for each block of the radio hologram.

2. The method according to claim 1, wherein the radio hologram is compressed by range.

3. The method according to claim 1, wherein the radio hologram is processed by correction to eliminate hardware-based distortions, and is brought to a normalized form.

4. The method according to claim 1, wherein, when the radio hologram is divided by the computer into blocks by azimuth and blocks by range, the size of the blocks by azimuth depends on the size of a synthetic aperture of the radar and coincides with a synthesized block.

5. The method according to claim 1, wherein a pulse mode of signal radiation is used in the radar.

6. The method according to claim 1, wherein the phase difference between two adjacent columns of the two-dimensional array is defined by the computer for each block by a complex conjugation operation.

7. A system for automatic real time evaluation of Doppler frequency and angle of antenna beam deviation, wherein the system comprises:

   • at least one radar mounted on a moving air vehicle, the radar comprising an analogue-to-digital converter; wherein the radar is configured to send out probing pulses to obtain measurements by azimuth, record readings via the analogue-to-digital converter to obtain measurements by range, and generate a radio hologram in form of a two-dimensional array of complex numbers; and

 • at least one computer configured to:

  ◦ obtain the radio hologram generated by the radar;
  ◦ divide radio hologram into blocks by azimuth and blocks by range;
  ◦ determine phase differences by azimuth between every two adjacent columns of the two-dimensional array following the numbers of the consecutive probing pulses for each obtained block;
  ◦ obtain average phases by azimuth using a predetermined set of determined phase differences by azimuth, and by averaging the phase differences by range over the reading number of the analogue-to-digital converter;
  ◦ define the average phase change for each block of radio hologram based on the obtained average phases by azimuth;
  ◦ estimate Doppler frequency and azimuthal observation angle with respect to flight-path vector on basis of average value of radio hologram phase change.

8. The system according to claim 7, additionally comprising a transceiver antenna complex.

9. The system according to claim 8, wherein the transceiver antenna complex is active or passive.

10. The system according to claim 8, wherein the transceiver antenna complex is configured as an active phased antenna array (APAA) or a passive array of radiating elements.

11. The system according to claim 10, wherein the transceiver APAA antenna complex includes a receive/transmit path comprising an array of terminal amplifiers and an array of low-noise amplifiers, as well as control unit.

12. The system according to claim 7, additionally comprising an inertial navigation system based on micro-electro-mechanical (MEMS) sensors.

13. The system according to claim 7, wherein the computer is implemented as a 3U-VPX unit, which has an active air cooling system, as well as a power supply unit configured to supply power into the system using onboard voltage of the moving air vehicle.

14. The system according to claim 7, wherein the computer comprises at least one general-purpose board and a high-performance MXM CUDA computing board.

15. The system according to claim 7, wherein the computer is implemented in the form of several 3U-VPX boards of the VITA-56 standard and is configured to monitor and control the operation of the system, interact via external interfaces, and track the air vehicle telemetry.

16. The system according to claim 7, wherein the computer includes a high frequency (HF) signal generation/reception subsystem in form of a board which is laid out in a 3U-VPX form factor.

Computer

APAA

| Computer | | APAA |

Fig. 1

Fig. 2

Radio
hologram

Time

detection t

T/2

T/2

Fig. 3

Fig. 4

Range

Hologram

Azimuth

Division by azimuth

Block with dimensions of $M'$ on $N'$     Division by range

Fig. 5

Fig. 6

$$\tilde{G}(n,m)$$

| 1+3i | 2+3i | 3+3i | 2+3i | 2+4i | 1+2i | 5+3i |
|------|------|------|------|------|------|------|
| 5+2i | 2+1i | 5+4i | 2+3i | 2+3i | 4+4i | 5+3i |
| 7+3i | 3+7i | 5+3i | 6+3i | 7+1i | 8+3i | 8+4i |

$$\tilde{G}(n,m)*\tilde{G}^*(n-1,m)$$

| 11-3i | 15-3i | 15+3i | 16+2i | 10+0i | 11-7i |
|-------|-------|-------|-------|-------|-------|
| 12+1i | 14+3i | 22+7i | 13+0i | 20-4i | 32-8i |
| 42+40i | 36-26i | 39-3i | 45-15i | 59+13i | 76+8i |

$$\bar{a}(n)$$

| 65-38i | 65-26i | 76+7i | 74-13i | 89+9i | 119-7i |
|--------|--------|-------|--------|-------|--------|

$$\Delta\hat{\varphi}(n)$$

| -0.529 | 0.381 | -0.092 | 0.174 | -0.101 | 0.059 |
|--------|-------|--------|-------|--------|-------|

$$\Delta\hat{\varphi} = -0.109$$

$$\hat{f}_{d0} = -34.6958 \text{ Hz} \qquad \alpha = -0.0091 \text{ Radian}$$

Fig. 7

On at least one computer at least one radio hologram is obtained from the radar, provided that the radio hologram is a two-dimensional array consisting of complex numbers and the size of which is equal to the last number of probing pulse by azimuth and the last reading number of ADC signal by range. — 110

The radio hologram obtained at the previous step is divided by computer to blocks by azimuth and blocks by range on basis of the size of radio hologram. — 120

The phase difference between every two adjacent columns of radio hologram (n+1) and (n) is defined by computer for each block obtained at the previous step. — 130

Average phases by azimuth are defined using the set of phase differences defined at the previous step through their averaging over the reading number of the ADC signal. — 140

Average value of phase change for each block of radio hologram is defined by computer. — 150

Doppler frequency and azimuthal observation angle with respect to flight-path vector is estimated by computer on basis of average value of radio hologram phase change. — 160

Fig. 8

**Europäisches Patentamt**
**European Patent Office**
**Office européen des brevets**

**EUROPEAN SEARCH REPORT**

Application Number

EP 19 15 1405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UBOLKOSOLD P ET AL: "A Method to Extend the Estimation Range of the Existing Time-Domain Doppler Centroid Estimators", IEEE GEOSCIENCE AND REMOTE SENSING LETTERS, IEEE SERVICE CENTER, NEW YORK, NY, US, vol. 5, no. 2, 1 April 2008 (2008-04-01), pages 185-188, XP011332214, ISSN: 1545-598X, DOI: 10.1109/LGRS.2008.915741 * the whole document * | 1-16 | INV. G01S13/90 G01S7/40 |
| A | S. N. MADSEN: "Estimating the Doppler centroid of SAR data", IEEE TRANSACTIONS ON AEROSPACE AND ELECTRONIC SYSTEMS., vol. AES-25, no. 2, 1 March 1989 (1989-03-01), pages 134-140, XP055596414, US ISSN: 0018-9251, DOI: 10.1109/7.18675 * the whole document * | 1-16 | |
| A | FRANK WONG ET AL: "A Combined SAR Doppler Centroid Estimation Scheme Based upon Signal Phase", IEEE TRANSACTIONS ON GEOSCIENCE AND REMOTE SENSING, IEEE SERVICE CENTER, PISCATAWAY, NJ, US, vol. 34, no. 3, 1 May 1996 (1996-05-01), XP011020735, ISSN: 0196-2892 * the whole document * | 1-16 | TECHNICAL FIELDS SEARCHED (IPC) G01S |

-/--

The present search report has been drawn up for all claims

| Place of search | Date of completion of the search | Examiner |
|---|---|---|
| Munich | 14 June 2019 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 19 15 1405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHISHUN SHE ET AL: "ISAR MOTION COMPENSATION AND SUPERRESOLUTION IMAGING OF AIRCRAFT", PROCEEDINGS OF THE NATIONAL AEROSPACE AND ELECTRONICS CONFERENCE. (NAECON). DAYTON, MAY 18 - 22, 1992; [PROCEEDINGS OF THE NATIONAL AEROSPACE AND ELECTRONICS CONFERENCE. (NAECON)], NEW YORK, IEEE, US, vol. 1 OF 03, 18 May 1992 (1992-05-18), pages 291-296, XP000339591, DOI: 10.1109/NAECON.1992.220605 ISBN: 978-0-7803-0652-3 * page 293, column 1, line 6 - page 293, column 1, line 25 * ----- | 1-16 | |

TECHNICAL FIELDS SEARCHED (IPC)

The present search report has been drawn up for all claims

| Place of search | Date of completion of the search | Examiner |
|---|---|---|
| Munich | 14 June 2019 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)